**Europäisches Patentamt**

**European Patent Office**

**Office européen des brevets**

(19)

(11) Veröffentlichungsnummer: **0 235 618**
A2

(12) ## EUROPÄISCHE PATENTANMELDUNG

(21) Anmeldenummer: **87101743.0**

(22) Anmeldetag: **09.02.87**

(51) Int. Cl.⁴: **H 04 N 1/00**

(30) Priorität: **20.02.86 DE 3605463**

(43) Veröffentlichungstag der Anmeldung: **09.09.87**
**Patentblatt 87/37**

(84) Benannte Vertragsstaaten: **FR GB IT**

(71) Anmelder: **Agfa-Gevaert AG, Patentabteilung,
D-5090 Leverkusen 1 (DE)**

(72) Erfinder: **Müller, Jürgen Dipl.-Ing, Bozzarisstrasse 7,
D-8000 München 90 (DE)**

(54) **Mit einem Blattfilm- oder Blatthandlinggerät kombiniertes Kopiergerät für Laserstrahlaufzeichnungen oder ähnliches.**

(57) Ein Kopiergerät für Laserstrahlaufzeichnungen oder ein ähnliches erschütterungsfrei zu lagerndes Blattfilmaufnahme- oder Blattkopiergerät, das mit einem Handlinggerät für die Blattfilme oder Blätter kombiniert ist, ist so ausgebildet, daß das Gehäuse des Kopiergerätes (16) schwingungsgedämpft auf dem Boden (25) des Aufstellraumes aufgestellt ist und berührungsfrei in dem das Kopiergerät (16) umschließenden Gehäuse (1, 1e) des seinerseits auf dem Boden (25) aufgestellten Handlingsgeräts (1) angeordnet ist. Hierdurch wird erreicht, daß durch die Antriebs- und Transportmittel hervorgerufene Erschütterungen nicht auf den empfindlichen Kopierstrahlengang übertragen werden.

AGFA-GEVAERT
Aktiengesellschaft

Patentabteilung

D-5090 Leverkusen 1

eh-se

Mit einem Blattfilm- oder Blatthandlinggerät kombiniertes Kopiergerät für Laserstrahlaufzeichnungen oder ähnliches

---

Die Erfindung betrifft ein Kopiergerät für Laserstrahlaufzeichnungen oder ein ähnliches erschütterungsfrei zu
lagerndes Blattfilmaufnahme- oder Blattkopiergerät, das
mit einem Handlinggerät für die Blattfilme oder Blätter
kombiniert ist.

Kopien oder Aufnahmen von Laserstranlaufzeichnungen
werden auf besonderes, hierfür geeignetes Blattfilmmaterial aufgenommen. Dabei wird das Blattfilmmaterial
gewöhnlich in den Laserstrahlengang gebracht. Die Laserstrahlen werden durch hochempfindliche, exakt bewegbare Spiegel in beiden Koordinatenrichtungen abgelenkt.
Daher sind diese Kopiergeräte zur Herstellung einer
sog. Hardcopy von durch elektrische oder elektronische

A-G 5115

Abtastung hergestellten Aufzeichnungen mittels Laserstrahlen äußerst empfindlich gegenüber Schwingungen im Raum und Erschütterungen z.B. durch die Transportmittel für die verwendeten Blattfilme bzw. für die diese Filme im Aufnahmestrahlengang bewegenden Blattfilmbühnen. Andererseits muß eine zugehörige Filmbühne mit Filmbe- und -Entladevorrichtung und Filmvorratsstapeln vorhanden sein. Ähnliche Probleme können auch bei der Herstellung von Hardcopies mittels Kathodenstrahlen auftreten.

Der Erfindung liegt die Aufgabe zugrunde, eine Gerätekombination der eingangs genannten Art so auszubilden, daß Erschütterungen und Schwingungen, die durch den Film- oder Blatttransport und/oder die Bewegung des Kopiermaterialträgers, sei es eine Filmbühne oder ggf. auch eine Kopiertrommel, hervorgerufen werden, nicht auf den empfindlichen Kopierstrahlengang übertragen werden.

Diese Aufgabe wird erfindungsgemäß gelöst durch die Merkmale des Hauptanspruchs. Weitere vorteilhafte Merkmale der Erfindung sind den Unteransprüchen entnehmbar.

Die Erfindung wird anhand einer Zeichnung näher erläutert, die eine schematische Darstellung einer aufgebrochenen Seitenansicht einer erfindungsgemäßen Gerätekombination zeigt.

Im folgenden wird zunächst ein Blattfilmhandlinggerät 1, wie es beispielsweise in Verbindung mit der vorliegenden Erfindung ausgestaltet sein kann, beschrie-

A-G 5115

ben. Seine Oberseite ist mit 1a, seine Rückseite mit 1b bezeichnet. In sein oberstes Einschubfach 1c ist eine Röntgenblattfilmkassette 2 einführbar und in einem lichtdichten Bereich automatisch zu öffnen. Mittels bekannter und daher generell mit 3 bezeichneter Transportwalzenpaare, denen ein belichteter, in der geöffneten Kassette 2 befindlicher Film z.B. über einen nicht gezeigten Sauger zugeführt wird, wird dieser belichtete Film aus dem Kassetteneinschub 1c in einen über die Oberseite 1a vorstehenden weiteren Geräteteil 5 transportiert. Unter dem Einschub 1c sind weitere Einschübe 1d für sog. Dispensermagazine 6 vorgesehen, in die Dispenser-Magazine 6 für verschiedene Filmformate eingesetzt werden. In bekannter und daher nicht dargestellter und beschriebener Weise wird das Kassettenformat automatisch festgestellt und nach dem Entleeren einer Kassette 2 unbelichteter Film des entsprechenden Formats aus dem entsprechenden Dispensermagazin 6 in die Kassette 2 eingeführt, letztere geschlossen und wieder aus dem Einschub 1c herausbefördert. Hierzu dienen ebenfalls Transportwalzenpaare 3. Anstelle des gezeigten Kassettenent- und -beladegerätes 1 könnte aber auch nur ein Dispensermagazinteil 1d, 6 für Blattfilme oder ggf. Blattstapel verschiedener Formate oder auch nur eines Formats in Verbindung mit der vorliegenden Erfindung verwendet werden.

Das weitere Geräteteil 5 ist dabei, verglichen mit dem Gerät 1, selbst vergleichsweise klein und steht nur so viel nach oben über die Oberseite 1a und/oder ggf. nach rückwärts über die Rückseite 1b über, als die Höhe von Entwicklungstanks bzw. Fixier- und Wässerungstanks 12

A-G 5115

und deren Gehäuseabdeckung 13 sowie ggf. die Tiefe des optimal bemessenen Abwasserbehälters 14 dies erfordern. Eine Trocknungskammer 15 kann sich an die Tanks 12 in Richtung der Gerätevorderseite anschließen und das entsprechende Gehäuseteil 13a erhönt und mit Lüftungsschlitzen versehen sein. Dieses erhöhte Gehäuseteil 13a weist an der Gerätevorderseite einen Auffangkorb 13b für die entwickelten und getrockneten Filme auf. Das Gehäuseteil 13, welches die Tanks 12 für eine komplette Entwicklungsvorrichtung verkleidet, ergänzt das Gerät 1 zu einem kompakten, die Verarbeitung bzw. Erzeugung eines belichteten Blattfilms und dessen Entwicklung bewirkenden Gesamtgerät. Der Abwasserbehälter 14 steht auf Rädern 17 und ist so bemessen, daß er hinter oder unter den weiteren Geräteteil 5 an die Rückwand 1b schiebbar ist. Mittels einer lösbaren Riegelvorrichtung kann er in seiner Gebrauchsstellung mit der Rückwand 1b verriegelbar sein. Der Abwasserbehälter 14 kann mehrere Kammern aufweisen, so daß unterschiedliche Flüssigkeiten in den Tanks 12 je nach ihrer weiteren Verwertung oder Beseitigungsmöglichkeit getrennt in dem Abwasserbehälter 14 gesammelt werden können. In nicht gezeigter Weise kann der Abwasserbehälter einen Ausfluß zum Ablassen der Abwässer aufweisen oder ggf. auch ausgepumpt werden. Von den einzelnen Tanks 12 und einer nicht gezeigten Auffangwanne führen biegsame Abflußschläuche 35 seitlich neben den Transportwalzen 3 und Einschüben 1c, 1d oder hinter der Rückwand 1b vorbei zu dem Abwasserbehälter 14 bzw. dessen Kammern. Naturgemäß müssen die Abflüsse der Tanks 12 durch von Hand bedienbare, nicht gezeigte Hähne verschließbar sein.

A-G 5115

0235618

Wenn das Blattfilmhandlinggerät 1 nicht zur Ent- und Beladung von Blattfilmkassetten 2, vorzugsweise Röntgenfilmkassetten 2 ausgestaltet sein soll, kann das Schubfach 1c entfallen. Falls ein getrenntes Entwicklungsgerät vorgesehen ist oder im Handlinggerät 1 nur Kopierpapier bevorratet werden soll, kann auch die Entwicklungsvorrichtung 5, 12 entfallen und statt dessen nur ein Sammelbehälter für die unentwickelten Filme oder die fertigen Kopien an geeigneter Stelle angeordnet sein.

Das Handlinggerät 1 weist in seinem unteren Bereich einen durch das Gehäuseteil 1e umschlossenen Hohlraum auf. Das Gehäuseteil 1e weist an seinem Bodenteil 1f einen ausreichend großen Durchbruch 1g auf und ist an wenigstens einer seiner Seiten zu öffnen, so daß in den Hohlraum ein weiteres Gerät 16 hineingestellt werden kann.

Bei dem weiteren Gerät 16 kann es sich z.B. um einen Laserstrahlscanner oder um ein Kathodenstrahlgerät, die von Bildschirmgeräten gesteuert werden, handeln, wobei die gesteuerten Laser- oder Kathodenstrahlen zur Herstellung von lesbaren Kopien (Hardcopies) der im Bildschirmgerät sichtbaren Aufzeichnungen dienen. Gewöhnlich wird Filmmaterial für die Aufnahme der gesteuerten Laserstrahlen oder Kathodenstrahlen verwendet. Das Filmmaterial kann mittels einer Filmbühne 18 in den Strahlengang 19 gebracht werden. Dabei sind zwei verschiedene Aufnahmeweisen üblich. Entweder wird der gesteuerte Strahl 19 durch einen Spiegel 20 bei stillstehender Bühne 18, sowohl zeilenweise als auch senkrecht

A-G 5115

zu den Zeilen über das ganze Bildfeld abgelenkt oder es werden die Bühne 18 kontinuierlich in einer Koordinatenrichtung 21 mit einer bestimmten Geschwindigkeit verschoben und der Strahl 19 senkrecht hierzu hin und her abgelenkt.

Bei derartigen Geräten 16 darf der Kopierstrahlengang 19, 20 samt Strahlenquelle 22 keinerlei Erschütterungen erfahren. Wenn nun die den Kopierstrahlengang 22, 20, 19 bildenden Mittel (Strahlenquelle, nicht gezeigte Optik, Spiegel) in Verbindung mit der Bühne 18, dem Antrieb 23, 24 für die Bühne 18, der z.B. durch einen Motor 24 und einen Seilzug 23 in bekannter Weise gebildet sein kann, oder den Schubfächern 1d, den Dispensermagazinen 6 und/oder dem Kassettenladeteil 1c und/oder der Entwicklungsvorrichtung 12, 15 und deren Blatttransportmitteln, die nicht gezeigt sind, stünden, so würden die dauernden Erschütterungen und Schwingungen die Qualität der Kopiervorrichtung 22, 20, 19, 18 beeinträchtigen.

Dieser Kopiergeräteteil 16 ist daher ohne Berührung mit dem Handlinggerät 1 in den durch die Wand 1e begrenzten Hohlraum eingesetzt. Das Handlinggerät 1 ist am Boden 25 des der Aufstellung der Gerätekombination 1, 16 dienenden Raumes befestigt derart, so daß es sich nicht verschieben oder verrutschen kann, vgl. Bezugsziffer 1h. Das Kopiergerät 16 ist mit wenigstens einer eigenen Aufstellfläche 16a unter Zwischenschaltung von Dämpfungsgliedern 26 seinerseits mit allseitigem Abstand von dem Gehäuse 1, 1e auf dem Boden 25 gelagert und befestigt, wobei die Aufstellfläche 16a durch den

A-G 5115

Durchbruch 1g des Bodens 1f des Handlinggeräts 1 ragt. Der Abstand zwischen den Aufstellflächen 1h des Handlinggeräts 1 und 16a des Kopiergerätes 16 soll möglichst groß sein.

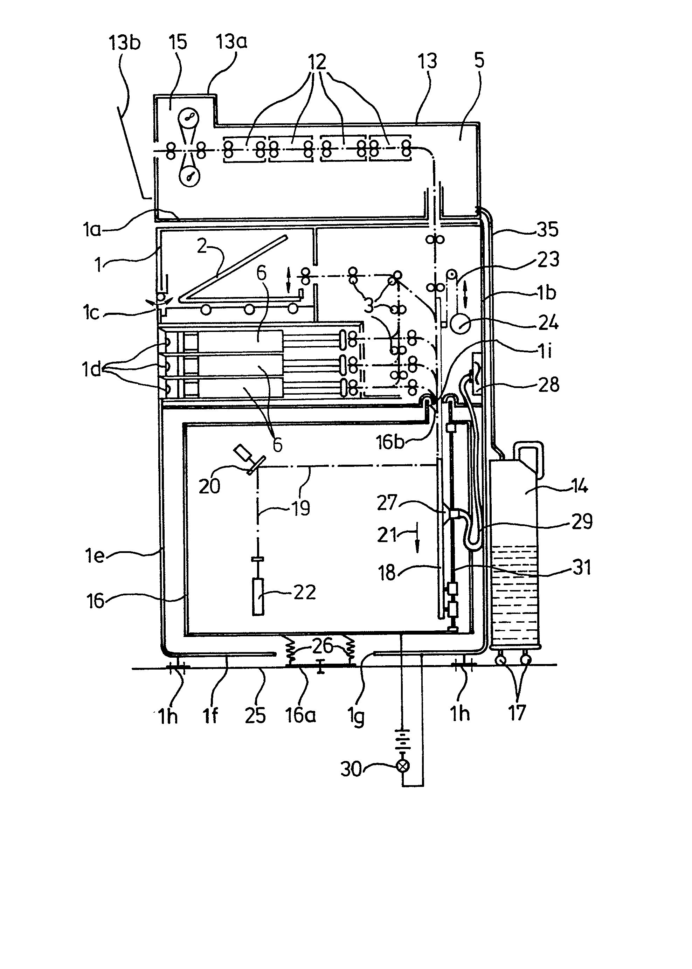

Die Bühne 18 ist daher im Kopiergerät 16 nur längs wenigstens einer im Kopiergerät 16 justierten Führungsstange 31 verschiebbar geführt, während ihr Antrieb 23, 24 im Handlinggerät 1 angeordnet ist. Sie selbst wird durch je einen Kanal 16b des Kopiergerätegehäuses 16 und einen in diesen mündenden Kanal 1i des Handlinggeräts 1 ohne Berührung mit dem Kanal 16b hindurchbewegt von einer strichpunktiert gezeichneten Stellung, in der sie mit Blattfilm aus einem der Dispensermagazine 6 beladen wird, in eine ausgezogen gezeichnete Aufnahmestellung im Kopiergerät 16 und zurück in das Handlinggerät 1 zum Entladen und Weitertransportieren des belichteten Films in die Entwicklungsvorrichtung. Für die Steuerung für die Bewegung der Bühne und deren Be- und Entladung kann jede bekannte Steuerung für derartige Geräte verwendet werden. Beispielsweise wird hierbei aber auch auf die nicht vorveröffentlichte DE-OS 34 22 077 verwiesen. Das Halten eines Filmes in der vertikal angeordneten und bewegbaren Bühne 18 kann durch eine bekannte Vakuum-Ansaugvorrichtung 27 erfolgen, wobei deren Unterdruckgerät 28 ebenfalls im Handlinggerät 1 gelagert ist. Die Verbindung zwischen der Ansaugvorrichtung 27 und dem Unterdruckgerät 28 kann durch einen ausreichend langen Schlauch 29 hergestellt werden, der berührungsfrei durch einen in der Figur nicht erkennbaren Schlitz in die Rückwand des Kopiergerätes 16 hindurchgeführt ist.

A-G 5115

Wird der Kopierstrahl 19 durch eine Strahlenart gebildet, die von elektrofotografischen Kopiertrommeln aufgezeichnet werden kann, so kann als Kopieträgermaterial gewöhnliches Papier verwendet werden. An die Stelle der Bühne 18 müßte dann eine Kopiertrommel treten, deren Antrieb und Lagerung jedoch im Handlinggerät 1 vorgesehen sein müßte. Die Kanäle 16b, 1i müßten dabei so groß ausgebildet sein, daß die Kopiertrommel gerade so weit in das Kopiergerät 16 hineinragen kann, wie dies für ihre streifenweise Belichtung erforderlich ist. Alle anderen für einen elektrofotografischen Kopiervorgang erforderlichen, der Trommel zugeordneten beweglichen Teile wären zweckmäßigerweise im Handlinggerät 1 unterzubringen.

Der Kanal 1i ist gemäß der Figur als in den Kanal 16b trichterähnlich einlaufend gezeigt. Es wäre aber auch möglich, daß er eine doppeltrichterähnliche Form aufweist, so daß die gegenüber dem Kanal 16b berührungsfreie Führung z.B. der Bühne 18 in beiden Bewegungsrichtungen absolut sichergestellt ist.

Schließlich kann es zweckmäßig sein, eine oder mehrere elektrische oder elektronische Anzeige- oder Meßvorrichtungen 30 zwischen der Wand 1e und der Wand des Kopiergerätes 16 vorzusehen, durch die (beispielsweise durch Entstehen eines Kurzschlusses) angezeigt wird, wenn sich aus irgendwelchen Gründen die Gehäusewand des Handlinggerätes 1 und des Kopiergerätes 16 berühren sollten.

A-G 5115

0235618

Wenn die in der Kassettenent- und -beladestation 1c zu behandelnden Kassetten 2 anderes Filmmaterial erfordern als die Kopierstation 18, 19, dann kann ggf. in unterschiedlichen Dispensermagazinen 6 nicht nur Blattfilmmaterial unterschiedlichen Formats, sondern auch unterschiedliches Blattfilmmaterial bevorratet werden.

Dadurch, daß alle außerhalb des Kopierstrahlenganges 22, 20, 19 liegenden bewegten Teile der Gerätekombination 1, 16 im Handlinggerät 1 gelagert und ggf. berührungsfrei in das Kopiergerät 16 eingeführt werden und das Kopiergerät 16 berührungsfrei im Handlinggerät 1 angeordnet und unabhängig von letzterem auf dem Boden 25 gelagert und befestigt ist, ist eine Gerätekombination geschaffen worden, in der das Kopiergerät 16 trotz der Erschütterungen und Schwingungen im Handlinggerät 1 erschütterungs- und schwingungsfrei aufstellbar ist.

A-G 5115

Ansprüche

1. Kopiergerät für Laserstrahlaufzeichnungen oder ähnliches erschütterungsfrei zu lagerndes Blattfilmaufnahme- oder Blattkopiergerät, das mit einem Handlinggerät für die Blattfilme oder Blätter kombiniert ist, dadurch gekennzeichnet, daß das Gehäuse des Kopergerätes (16) schwingungsgedämpft auf dem Boden (25) des Aufstellraumes aufgestellt ist und berührungsfrei in dem das Kopiergerät (16) umschließenden Gehäuse (1, 1e) des seinerseits auf dem Boden (25) aufgestellten Handlinggeräts (1) angeordnet ist.

2. Gerätekombination nach Anspruch 1, dadurch gekennzeichnet, daß der untere Bereich des Handlinggeräts (1) als durch zu öffnende Wandteile (1e) zugänglicher Hohlraum für die Aufstellung des Kopiergerätes (16) ausgebildet ist und seine Bodenwand (1f) einen Durchbruch (1g) zum Hindurchgreifen der Lagermittel (16a, 26) des Kopiergeräts (16) aufweist.

3. Gerätekombination nach einem der vorhergehenden Ansprüche, dadurch gekennzeichnet, daß ein gegenüber einem Kopierstrahlengang (22, 20, 19) des Kopiergeräts (16) in diesem bewegbarer Kopiermaterialträger (18), wie eine verschiebbare Blattfilmbühne (18) oder eine elektrofotografische Kopiertrommel, durch im Handlinggerät (1) gelagerte Antriebsmittel (23, 24) antreibbar

A-G 5115

ist und daß zwischen den Antriebsmitteln (23, 24) und dem Kopiermaterialträger (18) Getriebeteile (23) vorgesehen sind, die in berührungsfrei aneinanderschließenden Kanälen (16b, 1i) des Kopiergerätegehäuses (16) und des Handlinggerätegehäuses (1) berührungsfrei gegenüber dem kopiergeräteseitigen Kanal (16b) bewegbar sind.

4. Gerätekombination nach Anspruch 3, dadurch gekennzeichnet, daß der kopiergeräteseitige Kanal (16b) weiter als der handlinggeräteseitige Kanal ist und daß der handlinggeräteseitige Kanal (1i) trichter- oder doppeltrichterähnlich in den kopiergeräteseitigen Kanal (16b) berührungsfrei einmündet.

5. Gerätekombination nach einem der vorhergehenden Ansprüche, dadurch gekennzeichnet, daß bewegliche Verbindungsteile (29) zwischen dem Handlinggerät (1) und dem Kopiermaterialträger (18), wie ein Vakuum-Ansaugschlauch (29) für durch Unterdruck an einer Blattfilmbühne (18) zu befestigende Blattfilme, durch mindestens einen Schlitz im Kopiergerätegehäuse (16) berührungsfrei in letzteres eingeführt sind.

6. Gerätekombination nach einem der vorhergehenden Ansprüche, dadurch gekennzeichnet, daß das Handlinggerät (1) mindestens ein Dispensermagazin (6) für Stapel von als Kopieträger dienenden Blattfilmen oder Blättern und Transportmittel (3) für die Blattfilme oder Blätter vom Magazin (6) zum Kopiermaterialträger (18) und von diesem zur Weiterbehandlung aufweist.

7. Gerätekombination nach Anspruch 6, dadurch gekennzeichnet, daß das Handlinggerät (1) eine Entwicklungsvorrichtung (12) für als Kopieträger dienende Blattfilme aufweist.

8. Gerätekombination nach einem der vorhergehenden Ansprüche, dadurch gekennzeichnet, daß das Handlinggerät (1) eine Blattfilmkassettenent- und -beladestation (1c) aufweist und daß die Neubeschickung einer Blattfilmkassette (2) von einem Dispensermagazin (6) aus erfolgt.

9. Gerätekombination nach einem der vorhergenenden Ansprüche, dadurch gekennzeichnet, daß mindestens eine elektrische Meß-Anzeige- und/oder Alarmanlage (30) für den gegenseitigen Abstand des Kopiergerätegehäuses (16) vom Handlinggerätegehäuse (1) vorgesehen ist.

Hierzu 1 Blatt Zeichnungen

A-G 5115